# EUROPEAN PATENT APPLICATION

(11) **EP 3 905 539 A1**
(43) Date of publication of application: **03.11.2021**
(21) Application number: 19903699.7
(22) Date of filing: 04.12.2019
(51) Int. Cl.: H04B 5/00, G06K 7/10, H04B 13/00

(54) **COMMUNICATION SHEET AND ELECTRIC POWER TRANSMISSION METHOD**

(30) Priority: 28.12.2018 JP 2018247391
(71) Applicant: Teijin Limited, Osaka 530-0005 (JP)
(72) Inventor: NEGISHI Tsuyoto, Osaka-shi, Osaka 530-0005 (JP)
(74) Representative: Carpmaels & Ransford LLP
(86) International application number: PCT/JP2019/047461
(87) International publication number: WO 2020/137404

(57) **Abstract**

A conductor layer (100) is electrically conductive and comprises a first mesh region where apertures (120) are formed in a mesh shape. A conductor layer (200) is electrically conductive and comprises a second mesh region where apertures (220) are formed in a mesh shape. An insulator layer (300) is insulative and is disposed between the conductor layer (100) and the conductor layer (200). A communication sheet (1000) allows a radio wave supplied from a first communication device to percolate from the apertures (120) to form a first percolation region on the surface of the conductor layer (100), and allows the radio wave to percolate from the apertures (220) to form a second percolation region on the surface of the conductor layer (200). The communication sheet (1000) relays communication between the first communication device and a second communication device that is disposed in the first or second percolation region.

## Description

### Technical Field

The present disclosure relates to a communication sheet and an electric power transmission method.

### Background Art

At the present time, there is known two-dimensional communication using a communication sheet. For example, Patent Literature 1 describes a sheet structure for communication, which is formed by an upper layer having a conductive portion and nonconductive portions, a middle layer formed by a fibrous structure or a foamed resin sheet, and a lower layer electrically conductive all over. Further, Patent Literature 2 describes a sheet structure for communication, which is formed by sequentially layering the three layers of a conductor A layer having a conductive section and a nonconductive section, a base material layer formed by a resin molded form or a fibrous structure, and a conductor B layer in which a conductive section exists in 90% or more of its surface. Further, Patent Literature 3 describes a sheet structure for communication, which is formed by a base material that is a sheet, a film, or a fibrous structure, with a conductor A disposed in a lattice shape on one side of the base material and a conductor B existing on the other side of the base material, over 90% or more.

As described above, the currently known communication sheet is basically formed by sequentially layering a first conductor layer having apertures in a mesh shape, an insulator layer, and a second conductor layer having no apertures. Electromagnetic waves propagating inside the communication sheet percolate from the apertures in a mesh shape to form a proximity area for communication, on the surface of the communication sheet. That is, the currently known communication sheet relays communication between a first communication device that supplies electromagnetic waves to the communication sheet and a second communication device that is placed on one side of the communication sheet.

### Citation List

### Patent Literature

Patent Literature 1: Japanese Patent No. 4908187
Patent Literature 2: Japanese Patent No. 5318219
Patent Literature 3: Japanese Patent No. 5432139

### Summary of Invention

### Technical Problem

Incidentally, at the present time, there is a demand for a highly convenient communication sheet that is capable of relaying communication not only in a case where the second communication device is placed on the one side of the communication sheet, but also in a case where the second communication device is placed on the other side of the communication sheet. However, according to the technique disclosed in Patent Literatures 1 to 3, the proximity area for communication is formed only on the one side of the communication sheet, and hence in a case where the second communication device is placed on the other side of the communication sheet, it is impossible to relay communication. For this reason, there is a demand for a highly convenient communication sheet that is capable of relaying communication between the first communication device that supplies electromagnetic waves to the communication sheet and the second communication device even in a case where the second communication device is placed on either side of the two sides of the communication sheet.

The present disclosure is given in view of the above-described problem and it is an object of the present disclosure to provide a highly convenient communication sheet and so forth.

### Solution to Problem

To attain the above object, a communication sheet according to a first aspect of the present disclosure includes:
a first conductor layer that is electrically conductive and has a first mesh region in which first apertures are formed in a mesh shape;
a second conductor layer that is electrically conductive and has a second mesh region in which second apertures are formed in a mesh shape; and
an insulator layer that is insulative and is provided between the first conductor layer and the second conductor layer,
wherein
a first percolation region is formed on a surface of the first conductor layer by allowing electromagnetic waves supplied from a first communication device to percolate from the first apertures, and a second percolation region is formed on a surface of the second conductor layer by allowing the electromagnetic waves to percolate from the second apertures, and
the communication sheet relays communication between the first communication device and a second communication device placed in the first percolation region or the second percolation region.

When in plan view of the first mesh region, the first mesh region has a first aperture ratio that is a ratio of a total area of the first apertures to an entire area of the first mesh region may be a ratio in a range of 55% to 92%, and
when in plan view of the second mesh region, the second mesh region has a second aperture ratio that is a ratio of a total area of the second apertures to an entire area of the second mesh region may be a ratio in a range of 55% to 92%.

The second aperture ratio may be larger than the first aperture ratio, and
a thickness of the second percolation region may be larger than a thickness of the first percolation region.

The second conductor layer may include the second mesh region and a non-mesh region having no apertures formed therein.

To attain the above object, an electric power transmission method according to a second aspect of the present disclosure is an electric power transmission method for transmitting electric power by using the communication sheet, including:
forming the first percolation region on the surface of the first conductor layer by allowing electric power-supplying electromagnetic waves supplied from an electric power transmission device to percolate from the first apertures, and forming the second percolation region on the surface of the second conductor layer by allowing the electric power-supplying electromagnetic waves to percolate from the second apertures; and
relaying supply of electric power by the electric power-supplying electromagnetic waves from the electric power transmission device to an electric power reception device placed in the first percolation region or the second percolation region.

### Advantageous Effects of Invention

According to the present disclosure, it is possible to provide a highly convenient communication sheet and so forth.

### Brief Description of Drawings

FIG. 1 is a configuration diagram of a communication system using a communication sheet according to Embodiment 1 of the present disclosure;
FIG. 2 is an exploded perspective view of the communication sheet according to Embodiment 1 of the present disclosure;
FIG. 3 is an enlarged plan view of a first conductor layer according to Embodiment 1 of the present disclosure;
FIG. 4 is a plan view of the communication sheet according to Embodiment 1 of the present disclosure;
FIG. 5 is a cross-sectional view taken along line A-A in FIG. 4;
FIG. 6 is a configuration diagram of a communication system using a communication sheet according to Embodiment 2 of the present disclosure;
FIG. 7 is an exploded perspective view of the communication sheet according to Embodiment 2 of the present disclosure; and
FIG. 8 is a plan view of a second conductor layer according to Embodiment 3 of the present disclosure.

### Description of Embodiments

Hereafter, embodiments of the present disclosure will be described with reference to accompanying drawings. Note that in figures, the same or corresponding portions are denoted by the same reference numerals.

### (Embodiment 1)

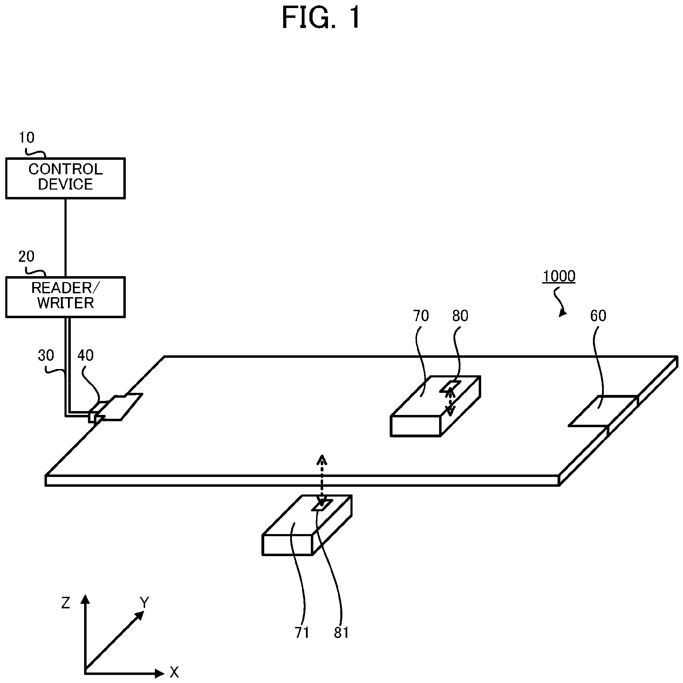

FIG. 1 is a configuration diagram of a communication system using a communication sheet 1000 according to Embodiment 1 of the present disclosure. The communication system is a system in which a reader/writer 20 controlled by a control device 10 communicates with a wireless tag 80 and a wireless tag 81 via the communication sheet 1000. Specifically, the communication system is a system in which the reader/writer 20 reads tag information from the wireless tag 80 placed on a front side of the communication sheet 1000 and the wireless tag 81 placed on a reverse side of the communication sheet 1000, via the communication sheet 1000.

In the present embodiment, a first communication device is the reader/writer 20, and second communication devices are the wireless tag 80 and the wireless tag 81. In other words, in the present disclosure, the communication sheet 1000 relays communication between the first communication device that supplies electromagnetic waves to the communication sheet 1000 and the second communication devices placed on two sides of the communication sheet 1000, respectively. Note that the communication device is a concept referring to everything which has at least one of a transmission function of transmitting information and a reception function of receiving information. In other words, the first communication device and the second communication devices may be terminal devices, such as personal computers and smartphones, may be IC's (Integrated Circuits) each having at least one of the transmission function and the reception function, and may be wireless tags.

The control device 10 controls reading and writing of tag information by the reader/writer 20. The control device 10 instructs the reader/writer 20 to read tag information and receive the read tag information from the reader/writer 20. Further, the control device 10 instructs the reader/writer 20 to write tag information. The control device 10 is, for example, a terminal device, such as a notebook PC, a tablet terminal, or a smart phone. For example, the control device 10 is comprised of a CPU (Central Processing Unit), a ROM (Read Only Memory), a RAM (Random Access Memory), a flash memory, a RTC (Real Time Clock), a touch screen, and a communication interface.

The reader/writer 20 read tag information from the wireless tag 80 under the control of the control device 10. Further, the reader/writer 20 writes tag information into the wireless tag 80 under the control of the control device 10. Note that in the present embodiment, a description is given of reading of tag information, but a description of writing of the tag information is omitted. The reader/writer 20 is connected to an electromagnetic wave interface 40 via a communication cable 30.

In a case where the reader/writer 20 has received an instruction for reading tag information from the control device 10, the reader/writer 20 transmits an electric signal associated with electromagnetic waves for supplying electric power, to the electromagnetic wave interface 40. Then, in a case where the radio interface 40 receives electromagnetic waves including tag information, the reader/writer 20 receives an electric signal associated with the electromagnetic waves from the electromagnetic wave interface 40. The reader/writer 20 transmits the tag information indicated by the received electric signal to the control device 10.

The communication cable 30 is a cable for connecting between the reader/writer 20 and the electromagnetic wave interface 40. In other words, the communication cable 30 has one end connected to the reader/writer 20 and the other end connected to the communication interface 40. The communication cable 30 is a coaxial cable including signal wires and a ground wire.

The electromagnetic wave interface 40 is a communication interface for connecting the reader/writer 20 to the communication sheet 1000. The electromagnetic wave interface 40 has a function of converting an electric signal supplied from the reader/writer 20 into electromagnetic waves to supply the converted electromagnetic waves to the communication sheet 1000 (hereafter referred to as "the electromagnetic wave transmission function") and a function of converting electromagnetic waves supplied from the communication sheet 1000 into an electric signal to supply the converted electric signal to the reader/writer 20 (hereafter referred to as "the electromagnetic wave reception function").

The electromagnetic wave transmission function is a function used, for example, when supplying electric power to the wireless tag 80 or the wireless tag 81. In other words, when supplying electric power to the wireless tag 80 or the wireless tag 81, the electromagnetic wave interface 40 receives an electric signal for supplying electric power from the reader/writer 20 and injects electromagnetic waves for supplying electric power into the communication sheet 1000.

The electromagnetic wave reception function is a function used when reading tag information from the wireless tag 80. In other words, when reading tag information from the wireless tag 80, the electromagnetic wave interface 40 receives electromagnetic waves indicating the tag information from the communication sheet 1000 and transmits an electric signal including the tag information to the reader/writer 20. The electromagnetic wave interface 40 is preferably provided in a central portion of one end of the communication sheet 1000 in a longitudinal direction thereof. In the present embodiment, a portion of the communication sheet 1000 at which the electromagnetic wave interface 40 is provided is referred to as the feeding point as deemed appropriate.

An electromagnetic wave absorption portion 60 absorbs electromagnetic waves and converts the same into thermal energy. The electromagnetic wave absorption portion 60 is provided, for example, in a central portion of the other end (a short side opposite to a short side where the feeding point is provided) of the communication sheet 1000 in the longitudinal direction thereof. The electromagnetic wave absorption portion 60 suppresses electromagnetic waves propagating in the longitudinal direction of the communication sheet 1000 from reflecting at the other end of the communication sheet 1000 in the longitudinal direction thereof.

Note that the electromagnetic waves supplied to the communication sheet propagate in a width direction of the communication sheet 1000 as well during propagation in the longitudinal direction thereof. Here, if the electromagnetic waves propagating in the width direction of the communication sheet 1000 reflect at opposite ends of the communication sheet 1000 in the width direction thereof, there is a possibility that proper communication is not realized. Therefore, the length of the communication sheet 1000 in the width direction thereof is set to a value which corresponds to a frequency that is a natural number multiple of half the frequency of electromagnetic waves, whereby reflection of electromagnetic waves at the opposite ends of the communication sheet 1000 in the width direction thereof is suppressed.

Articles 70 and 71 are articles under management, and may be of any kind. The articles 70 and 71 are, for example, articles for sale in a shop, medical supplies for use in a medical institution, and books under management of a library. The article 70 has the wireless tag 80 affixed thereto. The article 71 has the wireless tag 81 affixed thereto.

The wireless tags 80 and 81 store tag information, and upon receiving electromagnetic waves for supplying electric power, emit electromagnetic waves including the tag information. In other words, the wireless tags 80 and 81 are passive tabs, which are RFID (Radio Frequency Identification) tags. The tag information is identification information for identifying, for example, the articles 70 and 71. The identification information is, for example, information indicating a character string formed by numerical values and alphabetical letters. The frequency of electromagnetic waves which the wireless tags 80 and 81 receive or transmit is a frequency in the UHF (Ultra-High Frequency) band, and for example, 920 MHz Note that since the wireless tag 80 is a passive tag, the reader/writer 20 is required to supply electric power to the wireless tag 80 before reading tag information from the wireless tag 80.

The communication sheet 1000 is a medium having a sheet shape that propagates electromagnetic waves used for two-dimensional communication. That is, the communication sheet 1000 is a sheet structure for two-dimensional communication. The sheet shape refers to a shape that has an expansion as a two-dimensional surface and has a thin thickness. The communication sheet 1000 has a function of allowing electromagnetic waves supplied from the reader/writer 20 to percolate from the front and reverse surfaces thereof while allowing the electromagnetic waves to propagate in X-Y plane directions.

The shape of the communication sheet 1000 is a belt shape having a length of the communication sheet 1000 in the longitudinal direction thereof (hereafter simply referred to as "the longitudinal direction") longer than a length (width) of the communication sheet 1000 in the width direction thereof (hereafter simply referred to as "the width direction") and the length in the width direction sufficiently longer than a length of the communication sheet 1000 in a thickness direction thereof (hereafter simply referred to as "the thickness direction"). The longitudinal direction, the width direction, and the thickness direction are orthogonal to each other.

In the present embodiment, the longitudinal direction is an X-axis direction, the width direction is a Y-axis direction, and the thickness direction is a Z-axis direction. Note that the X-axis direction, the Y-axis direction, and the Z-axis direction are orthogonal to each other. The X-axis direction and the Y-axis direction are directions parallel to a horizontal plane. The Z-axis direction is a vertical direction. The shape of the communication sheet 1000 as viewed in the thickness direction is a rectangle formed by two long sides extending in the longitudinal direction and two short sides extending in the width direction.

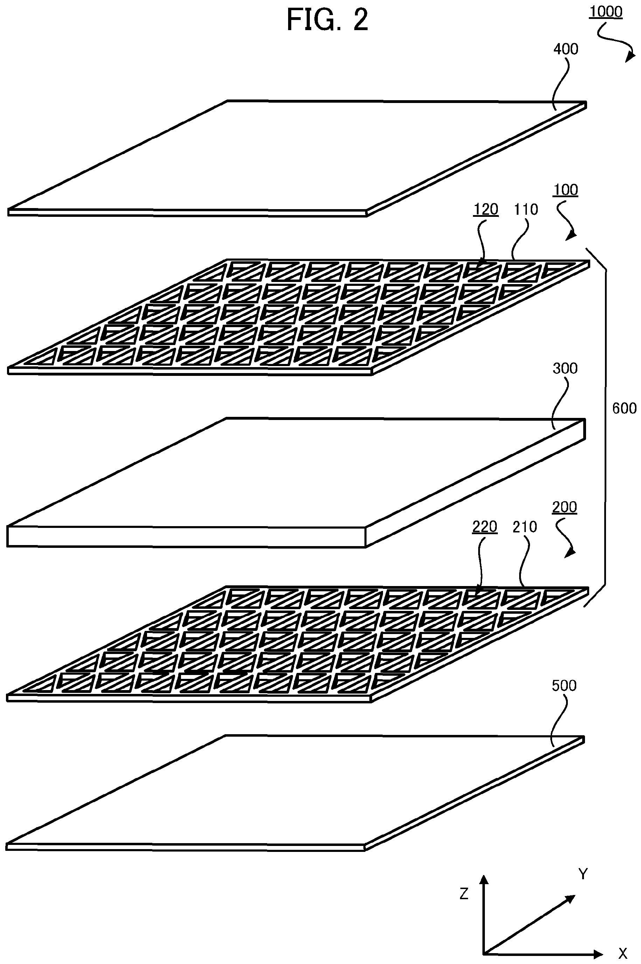

As shown in FIG. 2, the communication sheet 1000 is basically formed by sequentially layering a cover layer 400, a conductor layer 100, an insulator layer 300, a conductor layer 200, and a cover layer 500. Here, a structure formed by sequentially layering the conductor layer 100, the insulator layer 300, and the conductor layer 200 is referred to as a communication medium 600, as deemed appropriate. Note that in the present embodiment, the communication sheet 1000 includes the electromagnetic wave interface 40 and the electromagnetic wave absorption portion 60. The size of the communication sheet 1000 can be adjusted as required. In the present embodiment, the communication sheet 1000 has a length of 80 cm and a width of 30 cm.

The basis weight of the whole communication sheet 1000 is preferably, for example, 200g/m² to 800g/m², and more preferably 250g/m² to 600g/m². If the basis weight of the whole communication sheet 1000 is less than 200g/m², there is a possibility that an excellent communication state cannot be maintained. Further, if the basis weight of the whole communication sheet 1000 is more than 800g/m², the communication sheet 1000 is very heavy and cannot be conveniently carried.

The layers of the communication sheet 1000 may be layered by vapor deposition, sputtering, spray application, or the like. Alternatively, the layers of the communication sheet 1000 may be formed separately and then laminated by adhesion. As the method of adhesion, there may be mentioned for example, thermal adhesion by using a hot-melt resin, adhesion by using an acrylic resin or a urethane resin, and adhesion by using a styrene-butadiene rubber (SBR) or an isoprene rubber (IR).

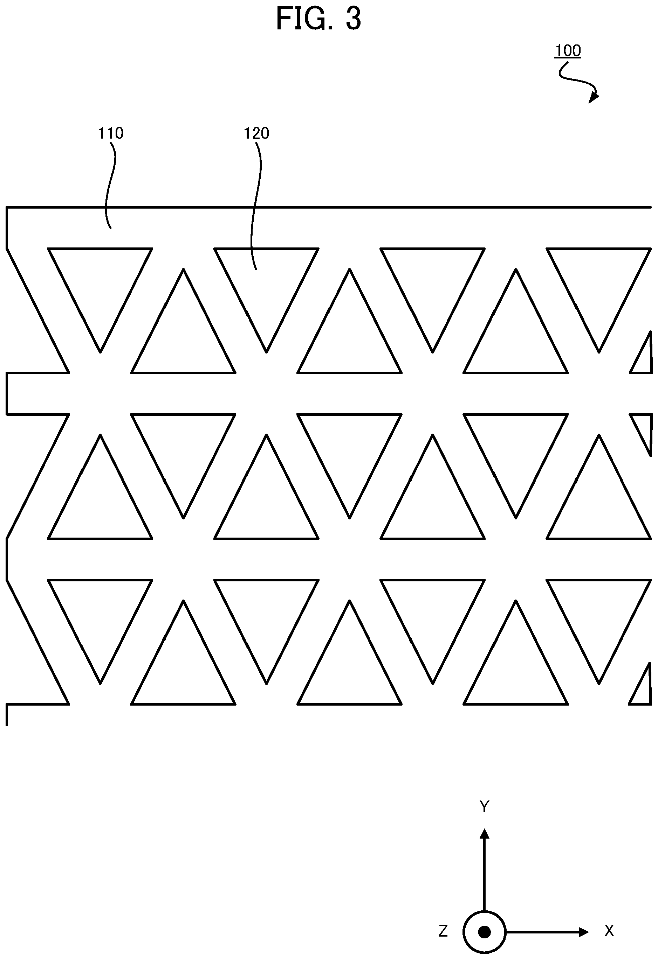

The conductor layer 100 is a layer electrically conductive and including a first mesh region in which apertures 120 are formed in a mesh shape. The mesh shape refers to a state in which a plurality of apertures are uniformly formed. Typically, the mesh shape means a state in which apertures having the same or different shapes are formed at regular intervals at least in one direction. The first mesh region is a region in which a plurality of the apertures 120 from which electromagnetic waves percolate are uniformly formed. The conductor layer 100 is an example of the first conductor layer of the present disclosure. In the present embodiment, the whole conductor layer 100, in other words, the whole first conductor layer, is the first mesh region. The apertures 120 are an example of first apertures of the present disclosure. The conductor layer 100 has a function of allowing electromagnetic waves propagating inside the communication sheet 1000 to leak out from the apertures 120 to form a percolation region 700. FIG. 3 is an expanded plan view of the conductor layer 100 as viewed in a positive direction of the Z axis. As shown in FIG. 3, the conductor layer 100 includes a conductor portion 110 and a large number of the apertures 120.

The conductor portion 110 is a member provided with electrical conductivity. The conductor portion 110 is formed, for example, by mutual crossing of a plurality of first linear conductors extending in a first direction, a plurality of second linear conductors extending in a second direction, and a plurality of third linear conductors extending in a third direction. The first direction is, for example, the X-axis direction. The second direction is, for example, a direction parallel to the X-Y plane, and is at an angle of 60 degrees with respect to the first direction. The third direction is, for example, a direction parallel to the X-Y plane, and is at an angle of 60 degrees with respect to the first direction and the second direction. The width of the conductor portion 110, that is, the width of the first linear conductor, the second linear conductor, and the third linear conductor is, for example, several hundreds micrometers to several millimeters. In the present embodiment, the width of the conductor portion 110 is one millimeter.

The conductor portion 110 is, basically, a portion contiguously formed in the conductor layer 100, and is not spatially separated in the conductor layer 100. In other words, the conductor portion 110 is formed, basically, as a single portion in the conductor layer 100. The conductor portion 110 may be formed by any material, insofar as it contains a material that is electrically conductive. For example, the conductor portion 110 may be formed by a metal, such as copper, silver, aluminum, stainless steel, or nickel, one of various alloys, or a fibrous structure formed by interleaving or weaving conductive threads. The conductor portion 110 is formed, for example, by vapor deposition, sputtering, screen printing, or the like, on one side of the insulator layer 300.

Here, in a case where the conductor portion 110 is high in electrical resistance, it is difficult to cause electromagnetic energy to exist inside the communication sheet 1000, and there is a high possibility that proper two-dimensional communication cannot be realized. For this reason, it is preferable that the electrical resistance of the conductor portion 110 is as low as possible. For example, the electrical resistance of the conductor portion 110 is preferably 5 Ω/m² or less, and more preferably, any of values ranging from 0.001 Ω/m² to 3 Ω/m².

The apertures 120 are apertures formed in a mesh shape in the conductor layer 100. The apertures 120 are insulative portions. The shape of the apertures 120 is, for example, an equilateral triangle. It is suitable that the length of one side of the equilateral triangle is shorter than the wavelength of electromagnetic waves, and the length is, for example, several millimeters to several centimeters. In the present embodiment, it is assumed that the length of one side of the equilateral triangle is 7 millimeters. The apertures 120 are formed together with the conductor portion 110 when the conductor portion 110 is formed on one surface of the insulator layer 300. The apertures 120 are basically filled with air. However, the apertures 120 may be filled with an insulative material.

In a case where the first mesh region corresponding to the whole conductor layer 100 is in plan view, a ratio of a total area of the apertures 120 to an entire area of the first mesh region is set as a first aperture ratio. In other words, the first aperture ratio is a ratio of apertures formed in the first mesh region. If the first aperture ratio exceeds 92%, there is a high possibility that electromagnetic energy disappears from the first mesh region and that an excellent communication state cannot be maintained. Further, if the first aperture ratio is less than 55%, there is a high possibility that electromagnetic energies mutually interfere in the communication sheet 1000 and that an excellent communication state cannot be maintained. Therefore, it is suitable that the first aperture ratio a ratio in a range of, for example, 55% to 92%.

Further, basically, as the first aperture ratio is larger, the amount of electromagnetic waves percolating from the surface of the first mesh region increases, which increases the thickness of the percolation region 700, described hereinafter. However, basically, as the first aperture ratio is larger, the propagation distance of electromagnetic waves is shorter. Therefore, it is suitable that the first aperture ratio is adjusted such that the thickness of the percolation region 700 becomes a suitable thickness and the propagation distance of electromagnetic waves becomes a suitable distance.

The thickness of the conductor layer 100 is preferably, for example, 20 micrometers to 1.2 millimeters, and more preferably 50 micrometers to 600 micrometers. In the present embodiment, the thickness of the conductor layer 100 is set to 32 micrometers. The basis weight of the conductor layer 100 is preferably, for example, 50 g/m² to 300 g/m², and more preferably 100 g/m² to 250 g/m².

The conductor layer 200 is a layer electrically conductive and including a second mesh region that is a region in which apertures 220 are formed in a mesh shape. The second mesh region is a region in which a plurality of the apertures 220 from which the electromagnetic waves leak are uniformly formed. The conductor layer 200 is an example of the second conductor layer of the present disclosure. In the second embodiment, the whole conductor layer 200, in other words, the whole second conductor layer, is the second mesh region. The apertures 220 are an example of second apertures of the present disclosure. The conductor layer 200 has a function of allowing electromagnetic waves propagating inside the communication sheet 1000 to leak out from the apertures 220 to form a percolation region 800. In the present embodiment, the shape of the conductor layer 100 and the shape of the conductor layer 200 are similar to each other and the material of the conductor layer 100 and the material of the conductor layer 200 are similar to each other. The conductor layer 200 includes a conductor portion 210 and the apertures 220.

The conductor portion 210 is, basically, a portion contiguously formed in the conductor layer 200, and is not spatially separated in the conductor layer 200. In other words, the conductor portion 210 is formed, basically, as a single portion in the conductor layer 200. The conductor portion 210 may be formed by any material, insofar as it contains a material that is electrically conductive. For example, the conductor portion 210 may be formed by a metal, such as copper, silver, aluminum, stainless steel, or nickel, one of various alloys, or a fibrous structure formed by interleaving or weaving conductive threads. The conductor portion 210 is formed, for example, by vapor deposition, sputtering, screen printing, or the like, on the other side of the insulator layer 300.

The apertures 220 are apertures formed in a mesh shape in the conductor layer 200. The apertures 220 are insulative portions. The shape of the apertures 220 is, for example, an equilateral triangle. In the present embodiment, it is assumed that the length of one side of the equilateral triangle is 7 millimeters. The apertures 220 are formed together with the conductor portion 210 when the conductor portion 210 is formed on the other side of the insulator layer 300. The apertures 220 are basically filled with air. However, the apertures 220 may be filled with an insulative material.

In a case where the second mesh region corresponding to the whole conductor layer 200 is in plan view, a ratio of a total area of the apertures 220 to an entire area of the second mesh region is set as a second aperture ratio. In other words, the second aperture ratio is a ratio of apertures formed in the second mesh region. If the second aperture ratio exceeds 92%, there is a high possibility that electromagnetic energy disappears from the second mesh region and that an excellent communication state cannot be maintained. Further, if the second aperture ratio is less than 55%, there is a high possibility that electromagnetic energies mutually interfere in the communication sheet 1000 and that an excellent communication state cannot be maintained. Therefore, it is suitable that the second aperture ratio is a ratio in a range of, for example, 55% to 92%.

Further, basically, as the second aperture ratio is larger, the amount of electromagnetic waves percolating from the surface of the second mesh region increases, which increases the thickness of the percolation region 800, referred to hereinafter. However, basically, as the second aperture ratio is larger, the propagation distance of electromagnetic waves is shorter. Therefore, it is suitable that the second aperture ratio is adjusted such that the thickness of the percolation region 800 becomes a suitable thickness and the propagation distance of electromagnetic waves becomes a suitable distance. Note that in the present embodiment, the first aperture ratio and the second aperture ratio are equal to each other.

The insulator layer 300 is a layer that is insulative and is formed by an insulator that is a dielectric. The insulator layer 300 is provided between the conductor layer 100 and the conductor layer 200. The insulator layer 300 is an insulator having a sheet shape, which forms a dielectric layer for propagating electromagnetic waves. The insulator layer 300 has a function of propagating electromagnetic waves supplied from the electromagnetic wave interface 40 in directions in which the communication sheet 1000 expands, in other words, in X-Y plane directions. The insulator layer 300 is desirably excellent in the transmission efficiency of electromagnetic waves. To improve the transmission efficiency, it is suitable that electromagnetic waves are properly trapped in regions in the vicinity of the opposite surfaces of the communication sheet 1000 and are efficiently transmitted to reduce attenuation of electromagnetic waves inside the transmission sheet.

To improve the transmission efficiency, it is suitable that an insulator is adopted that is small in relative dielectric constant and dielectric loss tangent in the frequency (for example, 920 MHz) of electromagnetic waves used for communication. For example, the relative dielectric constant of the insulator layer 300 in a range of 800 MHz to 5 GHz is preferably 1.0 to 15.0, more preferably 1.0 to 5.0, and further preferably 1.0 to 3.0. Further, the dielectric loss tangent of the insulator layer 300 in the range of 800 MHz to 5 GHz is preferably 0.01 or less, and more preferably 0.001 to 0.01.

The thickness of the insulator layer 300 is preferably, for example, 200 micrometers to 50 millimeters, and further preferably 500 micrometers to 30 millimeters. The basis weight of the insulator layer 300 is preferably, for example, 50 g/m² to 500 g/m², and further preferably 80 g/m² to 300 g/m². In the present embodiment, the thickness of the insulator layer 300 is set to 2 millimeters.

The insulator layer 300 is formed, for example, by a fibrous structure of nonwoven cloth or the like containing air layers, a resin plate, a foamed resin, or the like. As the material of the insulator layer 300, there may be mentioned, for example, polyethylene (PE), polypropylene (PP), polycarbonate (PC), polyethylene terephthalate (PET), polyethylene naphthalate (PEN), polybutylene terephthalate (PBT), and polytrimethylene terephthalate (PTT). Note that the insulator layer 300 may be formed by air. In the present embodiment, the insulator layer 300 is formed by foamed polyolefin.

The cover layer 400 is a layer covering the conductor layer 100. The cover layer 400 has a function of protecting the conductor layer 100. More specifically, the cover layer 400 suppresses attachment of a liquid, such as water, to the surface of the conductor layer 100, application of excessive pressure to the surface of the conductor layer 100, scratching of the surface of the conductor layer 100, contact of an external conductor on the surface of the conductor layer 100, scraping of the conductor layer 100 from the insulator layer 300, and the like. The insulator layer 300, the conductor layer 100, and the cover layer 400 are fixed to each other such that they are brought into close contact with each other. The cover layer 400 is formed by an insulator.

The cover layer 400 is formed, for example, by one of various films or one of various resins. The films are, for example, films of polyesters, such as polyethylene terephthalate (PET) and polyethylene naphthalate (PEN), films of polyolefins, such as polyethylene (PE) and polypropylene (PP), a film of polyimide, and a film of ethylene-vinyl alcohol. The resins are, for example, acrylic resins and urethane resins. The thickness of the cover layer 400 is, for example, several micrometers to several hundred micrometers.

The cover layer 500 covers the surface of the conductor layer 200. The cover layer 500 has a function of protecting the conductor layer 200. The cover layer 500 is formed by one of various films or one of various resins. In the present embodiment, the material of the cover layer 500 is the same as that of the cover layer 400, and the size of the cover layer 500 is the same as the shape of the cover layer 400.

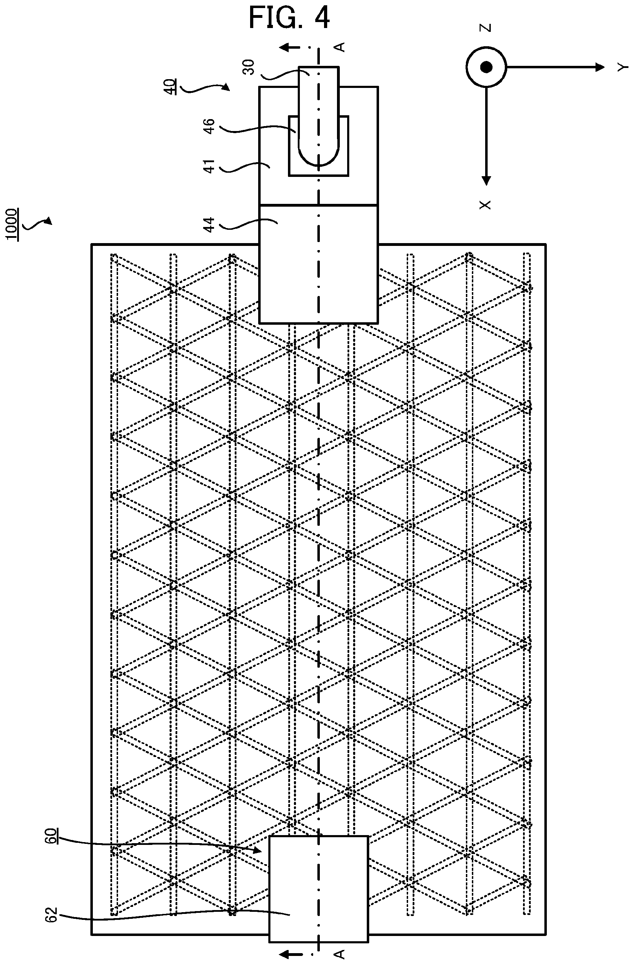

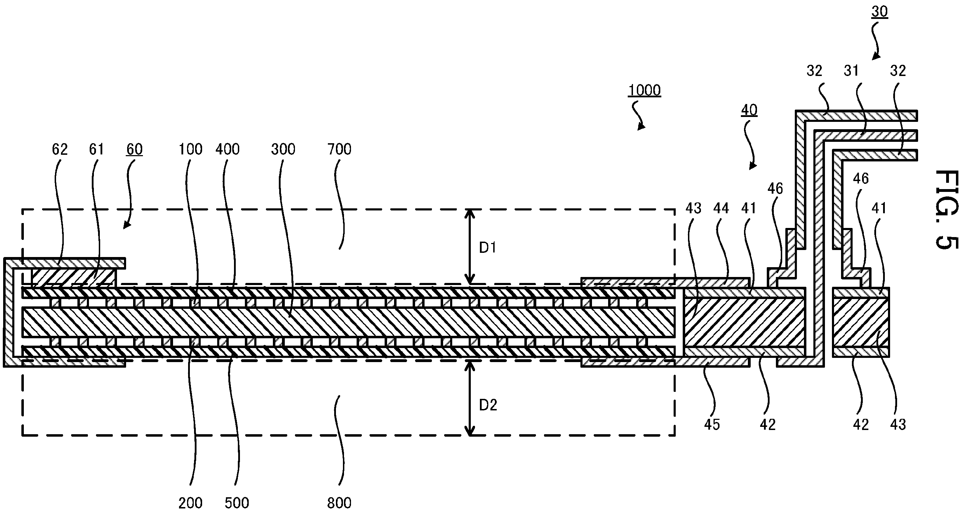

Next, the construction of the communication sheet 1000 will be described with reference to FIGS. 4 and 5. FIG. 4 is a plan view of the communication sheet 1000. FIG. 5 is a cross-sectional view taken along line A-A in FIG. 4. As shown in FIG. 4, the communication sheet 1000 has the electromagnetic wave interface 40 provided at one end thereof in the longitudinal direction, for supplying electromagnetic waves (electric signal) to the communication sheet 1000. The electromagnetic wave interface 40 is connected to the reader/writer 20 by the communication cable 30. Further, the communication sheet 1000 has the electromagnetic wave absorption portion 60 provided at the other end thereof in the longitudinal direction, for absorbing electromagnetic waves.

The electromagnetic wave interface 40 includes a conductor layer 41, a conductor layer 42, an insulator layer 43, an electrode 44, an electrode 45, and a connector 46. The conductor layer 41 is formed on one surface of the insulator layer 43 and is made of a conductor. The conductor layer 42 is formed on the other surface of the insulator layer 43 and is made of a conductor. The insulator layer 43 is sandwiched between the conductor layer 41 and the conductor layer 42 and is made of an insulator.

The electrode 44 is a flat plate-shaped electrode disposed such that it straddles between the conductor layer 41 and the cover layer 400. The electrode 45 is a flat plate-shaped electrode disposed such that it straddles between the conductor layer 42 and the cover layer 500. The connector 46 is provided on one surface of the conductor layer 41, for having the communication cable 30 plugged therein. The connector 46 is made of a conductor.

The communication cable 30 is a coaxial cable including an inner conductor 31 and an outer conductor 32. The inner conductor 31 is a conductor to which a signal potential is applied, and is formed, for example, by a copper wire. The outer conductor 32 is a conductor to which a ground potential is applied, and is formed, for example, by braided copper wires. The inner conductor 31 and the outer conductor 32 are insulated from each other.

The communication cable 30 is plugged into the connector 46. Then, the inner conductor 31 extends through a through hole formed in a substrate formed by the conductor layer 41, the conductor layer 42, and the insulator layer 43, and is connected to the conductor layer 42. On the other hand, the outer conductor 32 is connected to the connector 46. Therefore, the inner conductor 31, the conductor layer 42, and the electrode 45 are electrically connected, and the outer conductor 32, the connector 46, the conductor layer 41, and the electrode 44 are electrically connected. In short, the signal potential is applied to the electrode 45 and the ground potential is applied to the electrode 44. The electromagnetic waves (electric signal) supplied between the electrode 45 and the electrode 44 propagate through the communication sheet 1000.

The electromagnetic wave absorption portion 60 absorbs the supplied electromagnetic waves. The electromagnetic wave absorption portion 60 suppresses electromagnetic waves propagating through the communication sheet 1000 from reflecting at the other end of the communication sheet 1000. The electromagnetic wave absorption portion 60 includes an electromagnetic wave absorber 61 and a conductor plate 62. The electromagnetic wave absorber 61 absorbs the supplied electromagnetic waves and converts the same into thermal energy. The conductor plate 62 is a plate-shaped conductor U-shaped in cross-section.

When an electric signal is supplied from the reader/writer 20 to the communication sheet 1000, electromagnetic waves corresponding to the electric signal propagate inside the communication sheet 1000. Then, the electromagnetic waves propagating inside the communication sheet 1000 percolate from the front side and reverse side of the communication sheet 1000 to generate proximity areas. More specifically, the electromagnetic waves supplied to the communication sheet 1000 propagate through the insulator layer 300 between the conductor layer 100 and the conductor layer 200 from the connector 46 to the electromagnetic wave absorption portion 60.

Then, the electromagnetic waves propagating through the insulator layer 300 percolate from the apertures 120 formed in a mesh shape in the conductor layer 100, thereby leaking out into the percolation region 700 in the very vicinity of the conductor layer 100. The percolating electromagnetic waves (evanescent waves) do not propagate far, but forms a proximity area within the percolation region 700 in the very vicinity of the conductor layer 100.

The percolation region 700 is a region where the electromagnetic waves propagating through the communication sheet 1000 percolate from one surface of the communication sheet 1000. Here, when the wireless tag 80 as the second communication device, which is a communication partner of the reader/writer 20 as the first communication device, exists in the percolation region 700, communication between the reader/writer 20 and the wireless tag 80 is possible. Here, to realize stable communication, it is suitable that the length of the percolation region 700 in the Z-axis direction, that is, the thickness of the percolation region 700, is fixed and does not depend on coordinates in the X axis and the Y axis.

Further, the electromagnetic waves propagating through the insulator layer 300 percolate from the apertures 220 formed in a mesh shape in the conductor layer 200, thereby leaking out into the percolation region 800 in the very vicinity of the conductor layer 200. The percolating electromagnetic waves (evanescent waves) do not propagate far, but forms a proximity area within the percolation region 800 in the very vicinity of the conductor layer 200.

The percolation region 800 is a region where the electromagnetic waves propagating through the communication sheet 1000 percolate from the other surface of the communication sheet 1000. Here, when the wireless tag 81 as the second communication device, which is a communication partner of the reader/writer 20 as the first communication device, exists in the percolation region 800, communication between the reader/writer 20 and the wireless tag 81 is possible. Here, to realize stable communication, it is suitable that the length of the percolation region 800 in the Z-axis direction, that is, the thickness of the percolation region 800, is fixed and does not depend on coordinates in the X axis and the Y axis.

In the present embodiment, the pattern of the mesh formed in the conductor layer 100 is the same as the pattern of the mesh formed in the conductor layer 200. Therefore, in the present embodiment, the first aperture ratio and the second aperture ratio are equal to each other, and D1 as the thickness of the percolation region 700 and D2 as the thickness of the percolation region 800 are equal to each other. Therefore, the reader/writer 20 can read tag information with approximately equal electromagnetic wave strength, on whichever side of the communication sheet 1000 the wireless tag 80 or 81 is placed.

In the present embodiment, the conductor layer 100 and the conductor layer 200 of the communication sheet 1000 have a mesh pattern in the form of a triangular lattice. Therefore, the strength of electromagnetic waves in the vicinity of the surface of the communication sheet 1000 is very high, whereas the strength of electromagnetic waves at a location far from the surface of the communication sheet 1000 is very low. That is, the thicknesses of the percolation region 700 and the percolation region 800 are very small, and the strength of electromagnetic waves inside the percolation region 700 and the percolation region 800 are very high, but the strength of electromagnetic waves outside the percolation region 700 and the percolation region 800 are very low.

Therefore, the communication sheet 1000 is suitable for communicating with a communication partner relatively low in antenna sensitivity. That is, the communication sheet 1000 is suitable for reading a RFID tag using electromagnetic waves at 920 MHz

As described heretofore, in the present embodiment, the conductor layer 100 including the first mesh region where the apertures 120 in a mesh shape are formed is provided on one side of the insulator layer 300 through which electromagnetic waves propagate, and the conductor layer 200 including the second mesh region where the apertures 220 in a mesh shape are formed is provided on the other side of the insulator layer 300. Accordingly, in the present embodiment, percolation regions are formed on both sides of the communication sheet 1000. Therefore, according to the present embodiment, it is possible to read tag information from both sides of the communication sheet 1000. For example, the reader/writer 20 can read tag information from both of the wireless tag 80 attached to the article 70 placed above the communication sheet 1000 and the wireless tag 81 attached to the article 71 placed below the communication sheet 1000.

Let it be assumed, for example, that in a shop, a first commodity having a first wireless tag attached thereto is placed on a first shelf, and a second commodity having a second wireless tag attached thereto is placed on a second shelf that is one shelf lower than the first shelf. In this case, for example, by placing the communication sheet 1000 on the upper surface or lower surface of the first shelf, it is possible to read tag information from both of the first wireless tag and the second wireless tag.

Note that in a case where it is desired to read tag information using the communication sheet 1000 from only one side thereof, it is suitable, for example, that a shield plate formed by a metal is provided on the other side of the communication sheet 1000. For example, in a case where the shield plate is placed on the first shelf and the communication sheet 1000 is placed on the shield plate, it is possible to suppress reading of tag information from the second wireless tag. In another case where the kind of commodities placed above the communication sheet 1000 and the kind of commodities placed below the communication sheet 1000 are different from each other, by referring to the kinds of commodities indicated by tag information, tag information acquired from below the communication sheet 1000 may be discarded.

On the other hand, the communication sheets disclosed in Patent Literature 1 to Patent Literature 3, which cannot perform both-side reading, cannot read tag information from both sides of the communication sheet. For example, in a case where this communication sheet is placed on the first shelf with its reading side facing upward, it is impossible to read tag information from the second wireless tag. Further, in a case where this communication sheet is placed on the first shelf with its reading side facing downward, it is impossible to read tag information from the first wireless tag. Note that a communication sheet incapable of performing both-side reading is, for example, a communication sheet formed by replacing the conductor layer 200 of the communication sheet 1000 with a plate-shaped conductor having no apertures 220 in a mesh shape.

As described above, the communication sheet 1000 is capable of reading tag information both from above and below the communication sheet 1000 without changing the facing side thereof. Further, the communication sheet 1000 is capable of reading tag information only from above or below the communication sheet 1000 by placing a shield plate or by discarding tag information. Thus, the communication sheet 1000 capable of performing both-side reading is highly convenient compared with a communication sheet incapable of performing both-side reading.

Note that in a case where the strength of supplied electromagnetic waves is approximately the same, it is considered that the communication sheet 1000 is small in the thickness of the percolation region 700, compared with the communication sheet incapable of performing both-side reading. Therefore, when using the communication sheet 1000, it is suitable to take a countermeasure, such as making the strength of supplied electromagnetic waves higher, making the longitudinal length of the communication sheet 1000 shorter, making the distance between the wireless tags 80 and 81 and the communication sheet 1000 shorter, or the like, compared with a case in which the communication sheet incapable of performing both-side reading is used.

### (Embodiment 2)

In Embodiment 1, the description is given of the communication sheet 1000 that is suitable for communication using electromagnetic waves at 920 MHz that is a frequency for RFID. In the present embodiment, a description is given of a communication sheet 1001 that is suitable for communication using electromagnetic waves at 2.45 GHz that is a frequency for Wi-Fi (registered trademark) or Bluetooth (registered trademark). Hereafter, there is described an example in which a smartphone 90 and a smartphone 91 are communicating with each other via the communication sheet 1001 using electromagnetic waves at 2.45 GHz. Hereafter, in the present embodiment, different portions from Embodiment 1 will mainly be described.

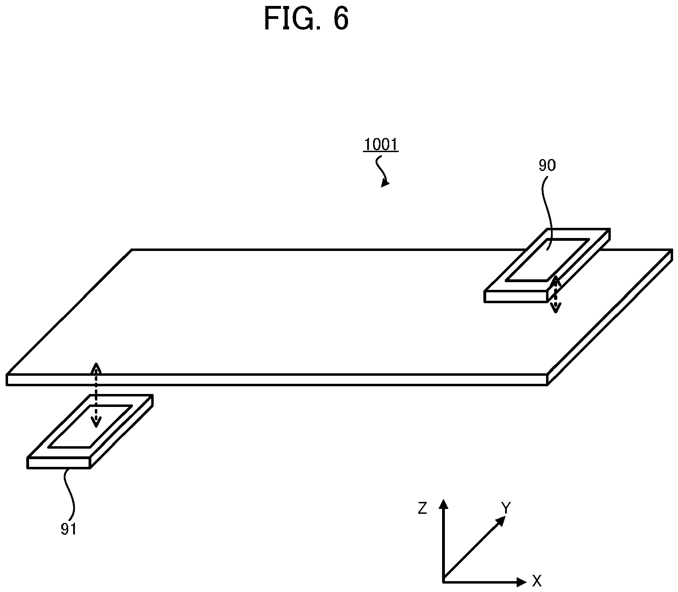

In the present embodiment, reading of tag information is not assumed. Therefore, as shown in FIG. 6, in the present embodiment, the control device 10, the reader/writer 20, and the communication cable 30 are not used. Further, in the present embodiment, the communication sheet 1001 does not include the electromagnetic wave interface 40 and the electromagnetic wave absorption portion 60. The smartphone 90 is an example of the first communication device of the present disclosure, and the smartphone 91 is an example of the second communication device of the present disclosure. In other words, in the present embodiment, the smartphone 91 receives electromagnetic waves from the smartphone 90 via the communication sheet 1001.

The smartphone 90 is a terminal device having a communication function. The smartphone 90 includes, for example, a CPU, a ROM, a RAM, a flash memory, and a communication interface. The CPU controls the overall operation of the smartphone 90. The ROM stores basic programs executed by the CPU. The RAM stores information temporarily used by the CPU.

The flash memory stores application programs executed by the CPU and various types of information. The communication interface is for realizing communication using electromagnetic waves at 2.45 GHz, that is, communication by Wi-Fi (registered trademark) or Bluetooth (registered trademark). In the present embodiment, the smartphone 90 is placed above the communication sheet 1001.

The smartphone 91 is a terminal device having a communication function. The smartphone 91 basically has the same configuration as the smartphone 90. That is, similar to the smartphone 90, the smartphone 91 includes, for example, a CPU, a ROM, a RAM, a flash memory, and a communication interface. In the present embodiment, the smartphone 91 is placed below the communication sheet 1001.

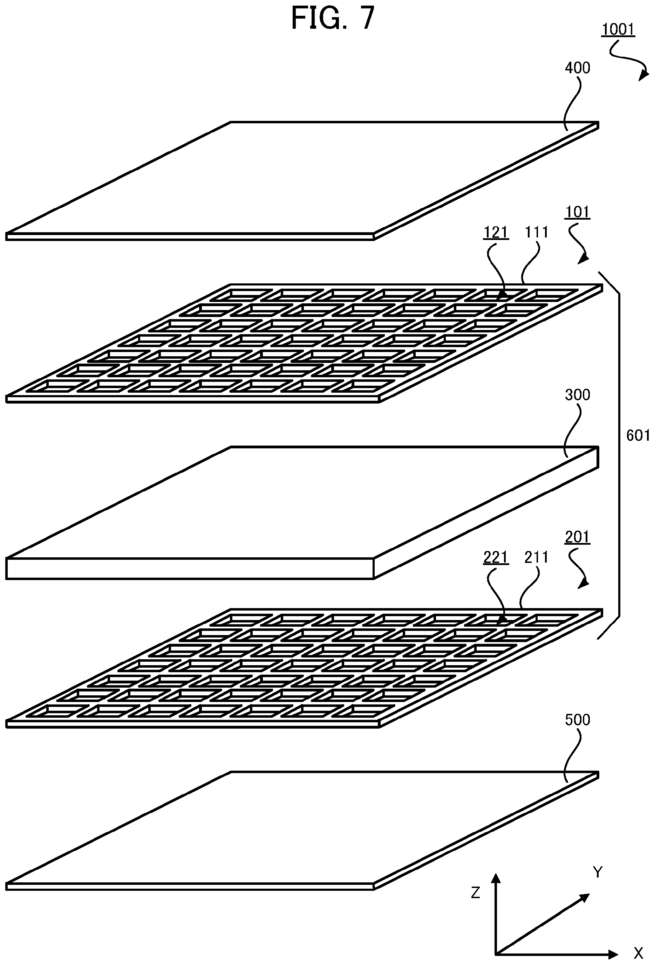

As shown in FIG. 7, the communication sheet 1001 is formed by sequentially layering the cover layer 400, a conductor layer 101, the insulator layer 300, a conductor layer 201, and the cover layer 500. Here, a structure formed by sequentially layering the conductor layer 101, the insulator layer 300, and the conductor layer 201 is referred to as a communication medium 601, as deemed appropriate.

The conductor layer 101 is a layer electrically conductive and including a first mesh region in which apertures 121 are formed in a mesh shape. The conductor layer 101 is an example of the first conductor layer of the present disclosure. In the present embodiment, the whole conductor layer 101, in other words, the whole first conductor layer, is the first mesh region. The apertures 121 are an example of the first apertures of the present disclosure. The conductor layer 101 has a function of allowing electromagnetic waves propagating inside the communication sheet 1001 to leak out from the apertures 121 to form a percolation region. The conductor layer 101 includes a conductor portion 111 and a large number of the apertures 121.

The conductor portion 111 is a member that is electrically conductive. The conductor portion 111 is formed, for example, by mutual crossing of a plurality of first linear conductors extending in a first direction and a plurality of second linear conductors extending in a second direction. The first direction is, for example, the X-axis direction. The second direction is, for example, the Y-axis direction. The width of the conductor portion 111, that is, the width of the first linear conductor and the second linear conductor is, for example, several hundreds micrometers to several millimeters. In the present embodiment, the width of the conductor portion 111 is one millimeter.

The conductor portion 111 is, basically, a portion contiguously formed in the conductor layer 101, and is not spatially separated in the conductor layer 101. In other words, the conductor portion 111 is formed, basically, as a single portion in the conductor layer 101. The conductor portion 111 may be formed by any material, insofar as it contains a material that is electrically conductive. For example, the conductor portion 111 may be formed by a metal, such as copper, silver, aluminum, stainless steel, or nickel, one of various alloys, or a fibrous structure formed by interleaving or weaving conductive threads. The conductor portion 111 is formed, for example, by vapor deposition, sputtering, screen printing, or the like, on one side of the insulator layer 300.

The apertures 121 are apertures formed in a mesh shape in the conductor layer 101. The apertures 121 are insulative portions. The shape of the apertures 121 is, for example, a square. It is suitable that the length of one side of the square is shorter than the wavelength of electromagnetic waves, and is, for example, several millimeters to several centimeters. In the present embodiment, it is assumed that the length of one side of the square is 5 millimeters. The apertures 121 are formed together with the conductor portion 111 when the conductor portion 111 is formed on one side of the insulator layer 300.

The conductor layer 201 is a layer electrically conductive and including a second mesh region that is a region in which apertures 221 are formed in a mesh shape. The conductor layer 201 is an example of the second conductor layer of the present disclosure. In the second embodiment, the whole conductor layer 201, in other words, the whole second conductor layer, is the second mesh region. The apertures 221 are an example of the second apertures of the present disclosure. The conductor layer 201 has a function of allowing electromagnetic waves propagating inside the communication sheet 1001 to leak out from the apertures 221 to form a percolation region. In the present embodiment, the shape of the conductor layer 101 and the shape of the conductor layer 201 are similar to each other and the material of the conductor layer 101 and the material of the conductor layer 201 are similar to each other. The conductor layer 201 includes a conductor portion 211 and the apertures 221.

The conductor portion 211 is, basically, a portion contiguously formed in the conductor layer 201, and is not spatially separated in the conductor layer 201. In other words, the conductor portion 211 is formed, basically, as a single portion in the conductor layer 201. The conductor portion 211 may be formed by any material, insofar as it contains a material that is electrically conductive. For example, the conductor portion 211 may be formed by a metal, such as copper, silver, aluminum, stainless steel, or nickel, one of various alloys, or a fibrous structure formed by interleaving or weaving conductive threads. The conductor portion 211 is formed, for example, by vapor deposition, sputtering, screen printing, or the like, on the other surface of the insulator layer 300.

The apertures 221 are apertures formed in a mesh shape in the conductor layer 201. The apertures 221 are insulative portions. The shape of the apertures 221 is, for example, a square. It is suitable that the length of one side of the square is shorter than the wavelength of electromagnetic waves, and is for example, several millimeters to several centimeters. In the present embodiment, it is assumed that the length of one side of the square is 5 millimeters. The apertures 221 are formed together with the conductor portion 211 when the conductor portion 211 is formed on the other side of the insulator layer 300.

The insulator layer 300 is a layer that is insulative and is formed by an insulator that is a dielectric. The insulator layer 300 is provided between the conductor layer 101 and the conductor layer 201. The insulator layer 300 is an insulator having a sheet shape, which forms a dielectric layer for propagating electromagnetic waves. To improve the transmission efficiency, it is suitable that an insulator is adopted that is small in relative dielectric constant and dielectric loss tangent in the frequency (for example, 2.45 GHz) of electromagnetic waves used for communication. For example, the relative dielectric constant of the insulator layer 300 in a range of 800 MHz to 5 GHz is preferably 1.0 to 15.0, more preferably 1.0 to 5.0, and further preferably 1.0 to 3.0. Further, the dielectric loss tangent of the insulator layer 300 in a range of 800 MHz to 5 GHz is preferably 0.01 or less, and more preferably 0.001 to 0.01.

The insulator layer 300, the cover layer 400, and the cover layer 500 in the present embodiment are similar in construction to the insulator layer 300, the cover layer 400, and the cover layer 500 in Embodiment 1. Descriptions of the cover layer 400 and the cover layer 500 are omitted.

In the present embodiment, the conductor layer 101 and the conductor layer 201 of the communication sheet 1001 have a mesh pattern in the form of a square lattice. Therefore, the strength of electromagnetic waves in the vicinity of the surface of the communication sheet 1001 is high, and the strength of electromagnetic waves at a location far from the surface of the communication sheet 1001 is also high to some extent. In other words, the thicknesses of the percolation region 700 and the percolation region 800 are small to some extent, and the strength of electromagnetic waves inside the percolation region 700 and the percolation region 800 is high whereas the strength of electromagnetic waves outside the percolation region 700 and the percolation region 800 is low.

For this reason, the communication sheet 1001 is suitable for communication with a communication partner relatively high in antenna sensitivity. In other words, the communication sheet 1001 is suitable for communication by Wi-Fi (registered trademark) or Bluetooth (registered trademark) using electromagnetic waves at 2.45 GHz.

As described above, in the present embodiment, the conductor layer 101 having the first mesh region that is a region in which the apertures 121 in a mesh shape are formed is provided on one side of the insulator layer 300 through which electromagnetic waves propagate, and the conductor layer 201 having the second mesh region that is a region in which the apertures 221 in a mesh shape are formed is provided on the other side of the insulator layer 300. Therefore, in the present embodiment, percolation regions are formed on both sides of the communication sheet 1001. For this reason, according to the present embodiment, it is possible to realize communication by Wi-Fi (registered trademark) or Bluetooth (registered trademark), using both surfaces of the communication sheet 1000.

### (Embodiment 3)

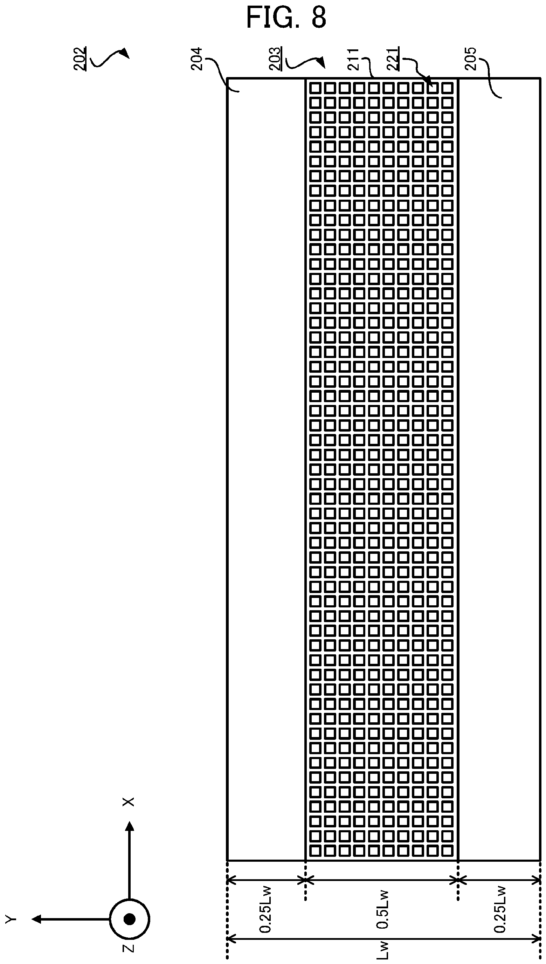

In Embodiments 1 and 2, description is given of an example in which the whole conductor layer is a mesh region and apertures are formed all over the conductor layer. Part of the conductor layer may be a mesh region in which apertures are formed and the remainder of the conductor layer may be a non-mesh region in which no apertures are formed. Hereafter, with reference to FIG. 8, description is given of an embodiment in which in the communication sheet 1001 according to Embodiment 2, the conductor layer 201 in which the apertures 221 are formed all over is replaced by a conductor layer 202 in which apertures 221 are formed in a partial region, as the second conductor layer.

FIG. 8 is a plan view of the conductor layer 202 in which the apertures 221 are formed in a partial region. As shown in FIG. 8, the conductor layer 202 is divided in the Y-axis region into the three regions of a region 203, a region 204, and a region 205. The region 203 is a region in which the conductor portion 211 and the apertures 221 in a mesh shape are provided, which is the second mesh region.

The regions 204 and 205 are regions having no apertures and solidly formed by a conductive material, in short, non-mesh regions. For example, the regions 204 and 205 are flat plate-shaped regions formed by a metal, such as copper, silver, aluminum, stainless steel, or nickel, one of various alloys, or a fibrous structure formed by interleaving or weaving conductive threads. As a method of forming the conductor layer 202, various methods are envisaged. For example, the conductor layer 202 can be obtained by forming a layer of conductor on the other side of the insulator layer 300 by vapor deposition, sputtering, or the like, and thereafter forming apertures 221 in a mesh shape by etching. Alternatively, the conductor layer 202 may be formed by printing a pattern corresponding to the three regions of the region 203, the region 204, and the region 205, on the other side of the insulator layer 300.

In the present embodiment, a central region of the communication sheet in the width direction as half of the communication sheet is set as the region 203, and opposite end regions of the communication sheet in the width direction as quarters of the communication sheet are set as the region 204 and the region 205, respectively. More specifically, assuming that the width of the communication sheet is represented by Lw, the width of the region 203 is 0.5 Lw, and the width of each of the region 204 and the region 205 is 0.25Lw. Further, in the present embodiment, the aperture ratio of the region 203 as the second mesh region, that is, the second aperture ratio is 90%, and the aperture ratio of each of the region 204 and the region 205 as the non-mesh region is 0%. Accordingly, the aperture ratio of the whole conductor layer 202 is 90% x 1/2 + 0% x 1/4 x 2 = 45%.

Here, the region 203 is used for reading tag information and is also used for propagation of electromagnetic waves. On the other hand, the region 204 and the region 205 are mainly used for propagation of electromagnetic waves. Here, it is considered that as the aperture ratio of the whole conductor layer 202 is lower, electromagnetic waves are difficult to attenuate. Therefore, in the present embodiment, as the ratio of an area of the region 203 to the entire area of the conductor layer 202 is larger, electromagnetic waves are easy to attenuate, but the region where tag information can be read is larger. On the other hand, as this ratio is smaller, the region where tag information can be read is smaller, but electromagnetic waves are difficult to attenuate.

In the present embodiment, on the conductor layer 202, the second mesh region mainly used for reading tag information and the non-mesh regions used for propagation of electromagnetic waves are provided. Therefore, according to the present embodiment, it is possible to suppress lowering of communication performance while realizing both-side reading of tag information.

### (Variation)

The embodiments of the present disclosure have been described above, but when executing the present disclosure, various forms of variation and application are possible.

In the present disclosure, which portions of constructions, functions, and operations described in the embodiments are to be adopted can be determined as desired. Further, in the present disclosure, besides the constructions, functions, and operations described above, further constructions, functions, and operations may be adopted. Further, the above-described embodiments can be freely combined on an as-needed basis. Further, the numbers of component elements described in the above-described embodiments can be adjusted as required. Further, it is to be understood that materials, sizes, and electrical properties that can be employed in the present disclosure are not limited to those indicated in the above-described embodiments.

In Embodiment 3, the description is given of an example in which the width of the region 203 is half of the width of the communication sheet, and the width of each of the region 204 and the region 205 is a quarter of the width of the communication sheet. It is to be understood that the widths of the region 203, the region 204, and the region 205 are not limited to this example. Further, in the embodiment, the description is given of an example in which the second mesh region is disposed in a central portion of the communication sheet in the width direction, and the non-mesh region is disposed at opposite ends of the communication sheet in the width direction. The locations of the second mesh region and the non-mesh region(s) are not limited to this example.

For example, the second mesh region may be disposed at one-side half of the communication sheet in the width direction, and the non-mesh region may be disposed at the remaining half. Alternatively, the second mesh may be disposed in a central portion of the communication sheet in the longitudinal direction, and the non-mesh regions may be disposed at opposite ends of the communication sheet in the longitudinal direction. Alternatively, the second mesh region may be disposed at one-side half of the communication sheet in the longitudinal direction, and the non-mesh region may be provided at the other portion.

In Embodiment 3, the description is given of an example in which the whole first conductor layer is set as the first mesh region and part of the second conductor layer is set as the second mesh region. That is, in Embodiment 3, the description is given of an example in which the first conductor layer is provided with no non-mesh region, but the second conductor layer is not provided with any non-mesh region. The non-mesh region may be provided not only in the second conductor layer, but also in the first conductor layer. In this case, when the communication sheet is in plan view, the location of the non-mesh region may be identical or different between the first conductor layer and the second conductor layer.

In Embodiment 3, the description is given of an example in which in a case where the first mesh region is provided in the first conductor layer and the second mesh region and the non-mesh region are provided in the second conductor layer, the shape of the apertures provided in the first mesh region and the second mesh region is a square, but it is to be understood that the shape of the apertures provided in the first mesh region and the second mesh region is not limited to a square.

In Embodiment 1, the description is given of an example in which in a case where the first aperture ratio and the second aperture ratio are equal to each other and there are no obstacles, the thickness of the percolation region 700 formed above the communication sheet 1000 and the thickness of the percolation region 800 formed below the communication sheet 1000 are equal to each other. The first aperture ratio and the second aperture ratio may be different from each other.

For example, in a case where the communication sheet 1000 is placed on a shelf, it is considered that electromagnetic waves leaking downward from the communication sheet 1000 largely attenuate as they pass through the shelf. In this case, it is suitable that the second aperture ratio is made larger than the first aperture ratio. As a result, the distance within which tag information can be read can be made approximately the same between above and below the communication sheet 1000.

In Embodiment 1, the description is given of an example in which the communication sheet 1000 includes the cover layer 400 and the cover layer 500. Further, in Embodiment 2, the description is given of an example in which the communication sheet 1001 includes the cover layer 400 and the cover layer 500. The communication sheet need not include the cover layer 400 and the cover layer 500. Further, the communication sheet may be further include another layer.

In Embodiment 1, the description is given of an example in which the shape of the apertures in a mesh shape is an equilateral triangle. Further, in Embodiments 2 and 3, the description is given of an example in which the shape of the apertures in a mesh shape is a square. It is to be understood that the shape of the apertures in a mesh shape is not limited to an equilateral triangle or a square. The shape of the apertures in a mesh shape may be, for example, any of a triangle other than the equilateral triangle, a polygon other than the triangle (a rectangle, a square, a parallelogram, a rhombus, a pentagon, a hexagon, and so forth), a circle, an ellipse, and so forth. Further, the shape of the apertures formed in the first conductor layer and the shape of the apertures formed in the second conductor layer may be different from each other. For example, the shape of apertures formed in the first conductor layer may be an equilateral triangle and the shape of apertures formed in the second conductor layer may be a square.

In Embodiment 1, the description is given of an example in which in the mesh region, apertures are formed at regular intervals in three directions forming an angle of 60 degrees with one another. In Embodiments 2 and 3, the description is given of an example in which in the mesh region, apertures are formed at regular intervals in two directions orthogonal to each other. In the mesh region, apertures may be formed at regular intervals in one direction. For example, in the mesh region, slit-shaped apertures long in the width direction (Y-axis direction) of the communication sheet may be formed at regular intervals in the longitudinal direction (X-axis direction) of the communication sheet. Alternatively, in the mesh region, slit-shaped apertures long in the longitudinal direction (X-axis direction) of the communication sheet may be formed at regular intervals in the width direction (Y-axis direction) of the communication sheet.

In Embodiment 1, the description is given of an example in which the frequency (920 MHz) for RFID is adopted as the frequency of electromagnetic waves. Further, in Embodiment 2, the description is given of an example in which the frequency (2.45 GHz) for Wi-Fi (registered trademark) and Bluetooth (registered trademark) is adopted as the frequency of electromagnetic waves. It is to be understood that the adopted frequency of electromagnetic waves is not limited to these frequencies. As the frequency of electromagnetic waves, it is possible to adopt a desired frequency, for example, in a range of 800 MHz to 5 GHz.

In Embodiment 1, the description is given of an example in which the communication sheet 1000 is used for transmission of information. The communication sheet 1000 can be used for transmission of electric power. In this case, the communication sheet 1000 plays the role of relaying supply of electric power from an electric power transmission device to an electric power reception device. Specifically, the communication sheet 1000 allows electric power-supplying electromagnetic waves supplied via the electromagnetic wave interface 40 from the electric power transmission device, to percolate from the apertures 120 to thereby form the percolation region 700 on the surface of the conductor layer 100, and allows the electric power-supplying electromagnetic waves to percolate from the apertures 220 to thereby form the percolation region 800 on the surface of the conductor layer 200. The electric power-supplying electromagnetic waves are electromagnetic waves for supplying electric power. The frequency of the electric power-supplying electromagnetic waves is, for example, a frequency in the UHF band.

Then, the communication sheet 1000 relays supply of electric power by the electric power-supplying electromagnetic waves, from the electric power transmission device to the electric power reception device placed in the percolation region 700 or the percolation region 800. The electric power transmission device may be any device insofar as it is a device for transmitting electric power-supplying electromagnetic waves. Although the reader/writer 20 in Embodiment 1 is an example of the electric power transmission device, the electric power transmission device is not limited to the reader/writer 20 used for reading tag information. For example, as the electric power transmission device, there may be employed one of various power supply devices that generate and deliver electric power-supplying electromagnetic waves by being powered by electric power supplied from a commercial power supply.

The electric power reception device may be any device, insofar as it is a device that operates by being powered by electric power-supplying electromagnetic waves received from the electric power transmission device. The wireless tag 80 in Embodiment 1 is an example of the electric power reception device, but the electric power reception device is not limited to the wireless tag 80 that is a passive tag. For example, as the electric power reception device, there may adopted any of smartphones, various types of sensors, various types of light emitters, various types of actuators, and so forth. According to power transmission using the communication sheet 1000, it is possible to easily transmit electric power from the electric power transmission device connected to the communication sheet 1000 to at least one electric power reception device existing on both sides of the communication sheet 1.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

This application claims the benefit of Japanese Patent Application No. 2018-247391, filed on December 28, 2018, the entire disclosure of which is incorporated by reference herein.

### Reference Signs List

10 Control device
20 Reader/writer
30 Communication cable
31 Inner conductor
32 Outer conductor
40 Electromagnetic wave interface
41, 42 Conductor layer
43 Insulator layer
44, 45 Electrode
46 Connector
60 Electromagnetic wave absorption portion
61 Electromagnetic wave absorber
62 Conductor plate
70, 71 Article
80, 81 Wireless tag
90, 91 Smartphone
100, 101, 200, 201, 202 Conductor layer
110, 111, 210, 211 Conductor portion
120, 121, 220, 221 Aperture
203, 204, 205 Region
300 Insulator layer
400, 500 Cover layer
600, 601 Communication medium
700, 800 Percolation region
1000, 1001 Communication sheet

## Claims

1. A communication sheet comprising:
a first conductor layer that is electrically conductive and has a first mesh region in which first apertures are formed in a mesh shape;
a second conductor layer that is electrically conductive and has a second mesh region in which second apertures are formed in a mesh shape; and
an insulator layer that is insulative and is provided between the first conductor layer and the second conductor layer,
wherein
a first percolation region is formed on a surface of the first conductor layer by allowing electromagnetic waves supplied from a first communication device to percolate from the first apertures, and a second percolation region is formed on a surface of the second conductor layer by allowing the electromagnetic waves to percolate from the second apertures, and
the communication sheet relays communication between the first communication device and a second communication device placed on the first percolation region or the second percolation region.

2. The communication sheet according to claim 1, wherein
when in plan view of the first mesh region, the first mesh region has a first aperture ratio that is a ratio of a total area of the first apertures to an entire area of the first mesh region is a ratio in a range of 55% to 92%, and
when in plan view of the second mesh region, the second mesh region has a second aperture ratio that is a ratio of a total area of the second apertures to an entire area of the second mesh region is a ratio in a range of 55% to 92%.

3. The communication sheet according to claim 2, wherein
the second aperture ratio is larger than the first aperture ratio, and
a thickness of the second percolation region is larger than a thickness of the first percolation region.

4. The communication sheet according to any one of claims 1 to 3, wherein the second conductor layer includes the second mesh region and a non-mesh region having no apertures formed therein.

5. An electric power transmission method for transmitting electric power by using the communication sheet according to any one of claims 1 to 4, comprising:
forming the first percolation region on the surface of the first conductor layer by allowing electric power-supplying electromagnetic waves supplied from an electric power transmission device to percolate from the first apertures, and forming the second percolation region on the surface of the second conductor layer by allowing the electric power-supplying electromagnetic waves to percolate from the second apertures; and
relaying supply of electric power by the electric power-supplying electromagnetic waves from the electric power transmission device to an electric power reception device placed in the first percolation region or the second percolation region.
